Europäisches Patentamt

European Patent Office

Office européen des brevets

(19)

(11) Publication number: **0 373 726 B1**

## EUROPEAN PATENT SPECIFICATION

(12)

(45) Date of publication of patent specification: **28.06.95**

(51) Int. Cl.⁶: **D21B 1/02**, D21J 1/14, B27N 1/00, B27N 7/00

(21) Application number: **89203170.9**

(22) Date of filing: **12.12.89**

(54) Cellulosic fibrous aggregate and a process for its preparation.

(30) Priority: **16.12.88 GB 8829444**
　　　　　**10.02.89 GB 8903012**

(43) Date of publication of application:
**20.06.90 Bulletin 90/25**

(45) Publication of the grant of the patent:
**28.06.95 Bulletin 95/26**

(84) Designated Contracting States:
**AT BE CH DE ES FR GB IT LI NL SE**

(56) References cited:
**EP-A- 0 161 766**
**FR-A- 1 103 226**
**GB-A- 811 533**
**US-A- 3 011 938**

(73) Proprietor: **SHELL INTERNATIONALE RE-
SEARCH MAATSCHAPPIJ B.V.
Carel van Bylandtlaan 30
NL-2596 HR Den Haag (NL)**

(72) Inventor: **Ruyter Herman Petrus
Badhuisweg 3
NL-1031 CM Amsterdam (NL)**
Inventor: **Hortulanus, Anton
Badhuisweg 3
NL-1031 CM Amsterdam (NL)**
Inventor: **Dekker, Jan
Badhuisweg 3
NL-1031 CM Amsterdam (NL)**

Rank Xerox (UK) Business Services
(3.10/3.09/3.3.3)

## Description

The present invention relates to a cellulosic fibrous aggregate, in particular a light wood aggregate, and a process for its preparation.

The terms "light wood" and "heavy wood" as used in this specification refer to wood which is respectively of relatively low density and relatively high density. The terms are not necessarily synonymous with the terms "softwood" and "hardwood", the latter being understood by persons skilled in the art to refer to wood from needle-bearing and deciduous trees respectively.

Solid wood products are traditionally made by the cutting, for example by sawing, of sections of trees cut to the desired length yielding a variety of square or rectangular sections. The physical and mechanical properties of the end product are thus directly comparable to those of the starting material. The economic and technical constraints of the aforementioned cutting operation are such that sections of trees having a minimum diameter of the order of 20cm are required. Furthermore, wood products consisting of heavy wood of relatively high density, for example teak and mahogany, owing to their superior physical and mechanical properties command the highest commercial values and are much in demand. However, such trees are generally very slow growing and need many years to reach the desired dimensions. Conversely, many species of trees yielding light wood of relatively low density, whilst generally having a faster growth rate than the aforementioned trees, possess relatively poor mechanical properties, have only a limited number of end uses and command only a low commercial value.

In particular, the applications of light woods, particularly applications outdoors, are severely limited by their tendency to absorb moisture and thereby swell/shrink and lose mechanical strength. This is not a problem associated with many heavy woods which have been used for facing buildings, garden furniture and other outdoor products. There is a plentiful supply of fast-growing light wood which, if it could be rendered less moisture-sensitive, could be an attractive commercial alternative to heavy wood.

The durability of cellulosic materials such as light wood is related to the capacity of the material to absorb moisture. Above moisture levels of the order of 20 to 25% wt, the material is subject to attack by such agents as fungi, insects and frost, which severely reduce the useful life of the material. It is known to treat light wood by impregnation with suitable chemical agents, or by applying a water-resistant coating. However, such treatments have been found to provide only a temporary or an insufficient level of protection against the absorbtion of moisture. Repeated treatment is often necessary to ensure a continued resistance.

In addition, sections of trees having a diameter of less than about 20cm have only a limited application in the aforementioned cutting processes, whilst sections having a diameter less than about 15cm are of virutally no use in such processes.

Accordingly, it would offer considerable advantages in both cost and time if a process could be found to convert the relatively low diameter sections of trees into sections of larger size. Such a process would be most advantageous if the product were to possess improved physical and mechanical properties compared to those of the starting material, in particular if the starting material could be rendered more resistant to moisture.

Previous approaches to this problem have been largely based upon the aggregation of very small pieces of wood, for example chips, strands, particles and wafers, bonded with, for example, synthetic adhesives. The product of these processes, for example chipboard and fibre board, are available commercially. However, the strength of such products is largely dependant upon the strength of the particular bonding agent used. Resistance to moisture is provided in such products by the use of a water-resistant bonding agent. However, such procedures tend to be expensive or insufficiently effective and provide little intrinsic strength.

A number of proposals have been made for processes based upon the aggregation of very small pieces of wood, but without the addition of a bonding agent. For example, GB 959,375 discloses a process for the production of hardboard, fibreboard or the like comprising shredding rubber wood, treating the shredded wood with boiling water or steam to yield a fibrous pulp and compressing the pulp into the required board. GB 997,798 discloses a wet process for the production of moulded articles from cellulose-containing fibrous materials in which the whole of the fibrous material, having fibres of up to 40mm in length and up to 3mm in diameter is opened up, the water removed under pressure in moulds and the resulting mixture allowed to dry under pressure to yield the required product. GB 1,126,493 discloses a process for making board products from sugarcane comprising longitudinally opening the sugar cane stalk without damaging the rind, removing the pith from the rind and subjecting the rind to heat and pressure.

In addition, a number of proposals have been made for processes for treating wood pulp, powdered wood bark, wood chips and/or wood shavings by the action of water, heat and pressure to yield sheet material and/or moulded products. Such proposals are disclosed in GB 27,048 (1913); GB 659,559; GB

2

811,533; GB 663,034 and GB 644,503. However, none of the aforementioned proposals is directed to a process which can be applied to the aggregation of sections of trees having a relatively low diameter or to sections of light wood.

The strength inherent in cellulosic material arises from the presence in the material of elongate fibres of cellulose forming a fibrous network which is continuous throughout the material. However, in each prior art proposal, the fibrous starting material is cut or ground thereby significantly reducing the inherent strength in the starting material resulting from the presence of the network of elongate cellulosic fibres. In addition, the products of the aforementioned proposal processes are not resistant to moisture, further treatment, such as the inclusion of a hydrophobic agent in the product as suggested in GB 959,375, being necessary to impart resistance to moisture.

Further, a number of processes have been proposed for hardening and/or waterproofing wood. GB 217,095 discloses a process for obtaining a hardened consolidated wood that does not swell under the action of water, in which the cellulose present in the wood is converted into hydrated cellulosic-derivatives which act as adhesives, the wood being soaked in a weak aqueous solution of a mineral acid, after which it is exposed to pressure and heat. GB 168,064 discloses a process of consolidating wood and preventing it from swelling under the action of water, in which the wood in a moist condition is converted into a horn-like material by the application for a period of several hours of heat between 75°C and 180°C and a pressure of at least 200 atmospheres with the exclusion of air. DE 3148120 discloses a process for hardening and stabilising wood, preferably veneer, in which the wood, having a moisture content below the fibre saturation point, is heated to between 75°C and 150°C to soften its lignin components and then consolidated by pressing at a pressure of between 5 MPa and 100 MPa.

Finally, EP-A-161766 discloses a process for converting lignocellulosic materials into reconstituted products. The process comprises treating the lignocellulosic material in divided form with steam to heat the material to a temperature high enough to release hemicellulose but not exceeding the temperature of carbonisation, for a time sufficient to decompose and hydrolyse hemicellulose into free sugars, sugar polymers, dehydrated carbohydrates, furfural product and other decomposition products: forming the treated lignocellulosic material into a mat and pressing the mat at a temperature not exceeding the temperature at which the mat would char, at a pressure and for a time sufficient to transform and thermoset the free sugars, sugar polymers, dehydrated carbohydrates, furfural products and other decomposition products in the lignocellulose materials into a polymeric substance which adhesively bonds together the lignocellulosic material to yield the reconstituted composite product. However, the disclosure, in particular the specific Examples, is limited to the treatment of a divided starting material, such as rice husks, wheat straws, aspen chips, peanut shell, rice straw and planar shavings of spruce wood, that is material in which elongate cellulosic fibres are not present.

It can be seen, therefore, that a need exists for a process which provides for the formation of a moisture resistant cellulosic aggregate from a starting material comprising a continuous network of elongate cellulosic fibres and in which the strength giving properties inherent in the cellulosic fibres are maintained.

Most surprisingly, it has now been found possible to form a moisture resistant cellulosic fibrous aggregate from a cellulosic fibrous material by a process which comprises:

a softening stage comprising exposing a section of cellulosic fibrous material to the action of an aqueous softening agent at a temperature in the range of from 150°C to 220°C and at a pressure of at least the equilibrium vapour pressure of the softening agent at the operating temperature, thereby at least partially disproportionating and hydrolysing the hemicellulose and lignin present in the cellulosic fibrous material; and

a curing stage comprising drying the product of the softening stage at a temperature in the range of from 100°C to 220°C to yield a cross-linked cellulosic matrix.

The term "section" when used in relation to the starting material for the process used to form the aggregate of this aspect of the present invention is a reference to a portion of cellulosic fibrous material for example at least 20cm long and having a cross-section with a dimension for example of at least 5mm. Such pieces should be distinguished from the pulp, powder, shavings or chips of the prior art proposals discussed above.

The aggregate may be formed from a single section of cellulosic material, but is preferably formed from a plurality of sections.

The aggregate of the present invention possesses the most significant advantage that it can be formed from a plurality of sections of cellulosic fibrous material of lesser size. Thus the aggregate is particularly advantageous as it can be formed from sections of trees, such as thin branches and/or the material remaining from large sections of trees after cutting to form planks and beams which are of insufficient size for use in the formation of solid wood products. Such material is generally regarded as a waste material. In

3

addition, the aggregate of the present invention possesses the surprising advantage that it can be formed from sections of relatively low density material, for example light wood having relatively poor mechanical properties, for example stiffness, whilst the aggregate itself possesses much improved mechanical properties than those possessed by such light wood. Further, and most surprisingly, whilst the cellulosic fibrous starting materials, for example light wood, from which the aggregate is formed are hygroscopic, the process by which the aggregate is formed renders it far more capable of resisting moisture. Thus, it can be seen, that the opportunities for applying the aggregate of the present invention extend far beyond those existing for the material from which it is formed.

In addition, the aggregate of the present invention owing to the pressure of elongate cellulosic fibres has the appearance of untreated cellulosic material such as wood, that is the aggregate has a "grain". The presence of the elongate cellulosic fibres allows the aggregate to be worked by such techniques as planing which, for optimum performance, rely upon the presence of elongate cellulosic fibres, or a grain, in the material. Such properties are not possessed by the composite products of the prior art processes.

The aggregate of the present invention may be formed from any material comprising hemicellulose and elongate fibres of cellulose. Thus, the aggregate may be formed from sections of both light and heavy wood, annual fibrous crops, such as flax, jute, kenaf, straw and hemp, the fibrous waste arising from the processing of crops such as sugar cane (bagasse), reeds and grasses, for example elephant grass. The aggregate is particularly advantageous when formed from wood. The sources of wood may be, for example thinnings from plantations, tree branches and tree trunks, particularly those of sufficiently small diameter as to have only limited or no end use, the cylindrical core material residual to the production of veneer by peeling, sections of sawnwood, and residual material from the cutting of beams and planks from large sections of tree, in particular the sap-wood resulting from the most recent growth of the tree and often discarded as waste. The aggregate may be formed from sections of heavy wood, in which case, a significant improvement in the water resistant properties of the wood results. However, as mentioned above, the aggregate offers significant advantage when formed from sections of light wood, often obtained from trees with a high growth rate, in which case a significant improvement in the mechanical properties and water resistance of the wood results. Examples of species of trees yielding such wood include spruce, poplar, willow, beech, pine and eucalyptus.

A particularly preferred form of the aggregate of this invention is as a laminated aggregate comprising a plurality of layers of the cross-linked cellulosic matrix bonded together by means of an adhesive compound.

Although the direction of the fibres in a layer of the laminated aggregate may be at any angle with respect to that of the adjacent layer(s) it is preferred that either the average fibre direction in a layer is substantially at right angles to that in the adjacent layer(s) or the average fibre direction in each of the layers is substantially the same, that is parallel to one another.

The density of the laminated aggregate will be more or less proportional to that of the individual layers of the matrix on which they are based, which density in turn may vary from that of the original starting material of the process to a density of more than 2.5 times the density of said starting material. The mechanical performance properties of the laminiated aggregate will not only be related to that of the individual layers, but moreover also to the number of layers and to the direction of the fibres in a layer with respect to that in the adjacent layer(s).

The adhesive, the presence of which joins the individual layers to provide the laminated aggregate, can include any adhesive compound which has sufficient affinity for the carbohydrate structures in the matrix, thereby providing a sufficiently strong bond between the individual layers. Such adhesive compounds may include physically and chemically reacting compounds. Examples of physically reacting adhesive compounds include, in addition to those of animal, vegetable or mineral origin, synthetic polymeric adhesive compounds. Preferred polymeric compounds for use as adhesive in the present laminated aggregate are linear alternating copolymers of at least one olefinically unsaturated compound and carbon monoxide, such as ethylene-carbon monoxide copolymers and ethylene-propylene-carbon monoxide terpolymers. Such polymers are known per se for example from EP-A 121965, EP-A 213671, EP-A 229408 and US-A 3,913,391; likewise, their methods of preparation by catalytic copolymerization, are known from these references. Examples of suitable chemically reacting adhesives include phenol-formaldehyde-, urea-formaldehyde-, polyurethane- and epoxy resin-based systems. The type of adhesive or adhesive system which will be present in the laminated aggregate will be amongst others governed by the specific requirements for such an aggregate. For example should the aggregate be used in a humid environment or in contact with water, it is preferred to have a water-resistant adhesive present, whereas with aggregates exposed to relatively high temperatures the adhesive should be sufficiently stable under those conditions and should not for example decompose and/or melt.

Although the laminated aggregates will generally be based on layers of cross-linked cellulosic matrix of more or less the same thickness, laminated aggregates may be provided wherein the thickness of one or more of the layers may differ in thickness from that of the other layer(s). The density of the different layers, which layers together comprise the aggregate, will generally be the same. For certain applications however, it may be advantageous for laminated aggregates of the present invention to comprise one or more layers which differ in density with respect to that of the other layers, for example laminated aggregates wherein the two outer layers have a higher density than the layers in between said outer layers.

Although in general the laminated aggregates will be based on flat layers, some uses may require aggregates wherein the layers show a deviation from the principal plane, hereinafter referred to as non-flat aggregates. With such non-flat aggregates the average direction of the fibres in the different layers will preferably be substantially the same.

A further modification of the basic laminated aggregate concept as described hereinbefore are aggregates where one or both of the surfaces have been provided with a profile, which profile may be restricted to the outer layer or may extend to one or more of the adjacent layers of the aggregate.

The laminated aggregates of the present invention may when desired be for example sanded and/or provided with a protective or decorative coating, very similar to the treatment of conventional plywood.

According to a further aspect of the present invention there is provided a process for the preparation of a cellulosic fibrous aggregate from a cellulosic fibrous material, which process comprises

a softening stage comprising exposing a section of cellulosic fibrous material to the action of an aqueous softening agent at a temperature in the range of from 150°C to 220°C at a pressure of at least the equilibrium vapour pressure of the softening agent at the operating temperature, thereby at least partially disproportionating and hydrolysing hemicellulose and lignin present in the cellulosic fibrous material; and

a curing stage comprising drying the product of the softening stage at a temperature in the range of from 100°C to 220°C to yield a cross-linked cellulosic matrix.

The objective of the softening stage is to at least partially, break down hemicellulose and lignin present in the starting material by means of disproportionation and hydrolysis reactions. The products of the these reactions include, for example, such compounds as aldehydes and phenols. Without wishing to be bound by theory, it appears that the products of these disproportionation and hydrolysis reaction undergo polymerisation in the curing stage of the process yielding products which serve to cross-link the existing cellulose fibres to form the cross-linked cellulosic matrix. Thus, it appears that water resistance is imparted to the aggregate by the irreversible chemical conversion of hygroscopic carbohydrates and lignin in the starting material into water resistant resins. It is believed that the cross-linking of the cellulose fibres imparts mechanical strength in a radial direction within the aggregate which, when combined with the strength inherent in the longitudinal network of cellulose fibres present in the starting material and retained in the aggregate, yields a product with markedly improved overall mechanical properties.

The starting material to be subjected to the process of the present invention is preferably freshly harvested material, the loss of moisture from which having been prevented. If the selected starting material has been dried, its moisture content is preferably increased, by exposure to water or steam. A starting material having a moisture content of about 50 to 60% wt (50 to 40% wt dry material) is especially preferred.

The sections of cellulosic fibrous material are softened by the action of an aqueous softening agent at an elevated temperature. The softening agent may be present either as water or as steam. However, softening may be facilitated by the inclusion in the aqueous softening agent of certain chemical additives, for example an organic or inorganic acid, such as acetic, nitric or sulphuric acid, alkali metal or alkaline earth metal hydroxides or carbonates, such as sodium hydroxide, calcium hydroxide, sodium carbonate, potassium carbonate, and water-miscible lignin solvents, such as lower alcohols, for example ethanol, or dioxane. Ammonia, either gaseous or in aqueous solution, is a known softening agent and may form part of the aqueous softening agent of this process.

The softening agent is most preferably steam, a preferred method of exposing the starting material to the softening agent being by allowing steam to condense on the surface of the starting material.

The softening of the cellulosic fibrous material is effected at elevated temperature. The upper limit of temperature is the temperature at which the cellulosic fibrous material thermally degrades. In general, temperatures in the range of from about 150°C to 220°C may be employed, preferably from about 150°C to 200°C, more preferably from about 180°C to 200°C.

The softening of the starting material is effected at a pressure of at least the equilibrium vapour pressure of the softening agent at the particular operating temperature selected. Preferably, a pressure above the equilibrium vapour pressure of the softening agent is employed.

The duration of the softening stage will vary according to the precise conditions under which softening is effected. In general, the residence time of material in the softening stage will be from about 1 minute to about 1 hour, preferably from about 5 minutes to 30 minutes. However, residence times in excess of these values may be required in certain circumstances. In this respect, it has been found that at temperatures above about 120°C, particularly in the range of from about 120°C to about 140°C, the prolonged exposure of the material being treated to the moisture necessary in the softening stage promotes harmful side reactions in the material which can lead to a reduction in the quality of the end product. The starting material should be rapidly heated to the operating temperature of the softening stage in order to avoid maintaining the temperature of the material within the range of from 120°C to 140°C for as little time as possible. It is preferred that the duration of the softening stage is as low as possible.

The second stage of the process of this invention involves the drying and curing of the product of the first or softening stage. Curing is effected at a temperature in the range of from about 100°C to 220°C, typically from 100°C to 170°C, but preferably above about 140°C.

The duration of the curing stage will vary according to the material being cured and the prevailing temperature. Typically, complete curing will require a residence time of from about 10 minutes to, in some cases, up to 10 hours.

As mentioned above with respect to the softening stage, it is preferable that the material being processed is not maintained at a temperature in the range of from about 120°C to 140°C for any considerable length of time in the presence of moisture. Accordingly, if curing stage is to be effected at a temperature at which the harmful side reactions will occur, provision should be made to rapidly remove any moisture in the material, for example by curing in a perforated mould.

To aid moisture removal from the material being processed, the process of the present invention may additionally comprise a dewatering stage in between the softening stage and curing stage. Dewatering may conveniently be effected, for example, by the application of pressure to the material by means of rollers and/or a press, or by vacuum evaporative drying techniques. In such a dewatering stage, however, it is preferred that the temperature of the material should not exceed 100°C, preferably 80°C, in order to prevent premature curing of the material being processed. Preferably, dewatering of the material is carried out to yield a material having a moisture content of from 10%wt (90%wt dry material) to 30%wt (70%wt dry material), typically 25%wt water (75%wt dry material).

It has been found that by effecting one or, preferably, all of the stages of the process of this invention under an inert or substantially inert atmosphere, that is one from which all or a substantial portion of the air has been displaced, yields a product having further improved properties. To facilitate this, it is preferred, when operating the process under an inert atmosphere, to avoid introducing air with the starting material. This may conveniently be achieved by immersing the starting material in water, preferably at elevated temperature, especially up to 100°C, before treatment. This has the dual effect of expelling any air trapped in the starting material and ensuring the material has the required moisture content for the softening stage, as discussed above.

It is a particularly advantageous feature of this invention that the product of the softening stage and the dewatering stage, if present, is a soft material capable of being easily moulded. Accordingly, a most convenient method of effecting the process of this invention is to cure the material being processed in a heated mould. This enables the aggregate product to be formed in any desired shape. Sufficient pressure is applied during curing in the mould to achieve a product of the required density and shape, such pressures typically ranging from 1 bar to 150 bar, often pressures in the range of from 5 to 10 bar being sufficient for most purposes.

Further, the product of the softening stage is suitable for use as an adhesive which, upon curing, can be used to form laminated products from layers of light wood, and/or heavy wood, layers of cellulosic composites, such as chipboards and hardboard, in addition to its use in forming laminates from layers of the aggregate of this invention.

The methods according to which the laminated aggregates may be manufactured are not essentially different to those employed in the manufacture of conventional plywood. Such methods typically comprise stacking the desired number of sheets of cross-linked matrix having the required dimensions and shape and provided with a sufficient amount of adhesive, and subsequently placing the stacked sheets in a suitable hot press for bonding, for example a press which can accommodate the shape of the laminated aggregate. The temperature and time in the press being related to the nature of the adhesive. Depending on the nature of the adhesive to be used, it can be applied as a liquid or solid and at ambient or elevated temperature. Methods for applying the adhesive to the layers of cross-linked matrix include brushing, rolling, spreading, spraying both conventional as well as electrostatic spraying techniques, while some solid adhesives can also be applied as a sheet or a foil.

The laminated aggregates hereinbefore described are high quality materials, which may suitably be used as construction materials, demonstrating superior performance properties compared to conventional plywood. The nature of their origin and the method of manufacture afford a great deal of flexibility in dimensions of the laminated aggregates; simultaneously their production is independent of the availability of starting materials of sufficient size and quality.

To improve its mechanical properties, the aggregate of the present invention may additionally comprise one or more synthetic polymers or resins. The polymer or resin may be conveniently applied to the surface of the aggregate, for example in the form of a powder or melt. Alternatively, the polymer may be added to or incorporated in the aggregate during its formation, conveniently prior to the final curing stage. Techniques for applying the polymer or resin to the aggregate either during or after its formation are well known in the art, such techniques including brushing, rolling, spreading and spraying (both conventional and electrostatic), as discussed above with respect to the formation of laminates. Suitable polymers and resins for inclusion in the aggregate include unsaturated polyesters, acrylic resins and polyurethane resins, as well as those discussed above with reference to the laminated composites. Particularly preferred polymers and resins are those which melt at temperatures within the operating temperature range of the curing stage. In this way, it is possible to add the polymer or resin in the form of a powder or as particles to the material being processed, the powder or particles then melting during the subsequent curing stage, thereby yielding a homogeneous product.

It is preferred, however, to incorporate into the aggregate, either during its formation or after, one or more monomers and, if necessary, one or more polymerisation catalysts. The monomer is preferably incorporated during formation of the aggregate before the curing stage. The aggregate is then subjected to conditions under which polymerisation of the monomer occurs. Particularly preferred monomers for inclusion in the aggregate are those which, when added during the process before the final curing stage, polymerise at the conditions prevailing in the curing stage, either by themselves or by the addition of one or more polymerisation catalysts or temperature sensitive polymerisation starters. In this way, the relatively more mobile and easier to handle monomer may be incorporated evenly throughout the aggregate, thus yielding a homogeneous product. Examples of suitable monomers include styrene and low molecular weight epoxy compounds.

The present invention will now be illustrated in the following specific Examples.

Example 1

Sections of eucalyptus with length ranging from 25 to 65 cm and with width (diameter in the case of branches) ranging from 3 to 12 cm were treated according to the following procedure.

Sections were selected having a moisture content of from 50% to 55%wt water (50% to 45% wt dry wood). In addition, air-dried wood was selected, but prior to treatment was immersed in water for 100 hours at ambient temperature.

The sections were heated at a temperature of 200°C in a closed vessel by the direct contact by saturated steam and water for 10 minutes. The sections were then cooled to 100°C before placing in a perforated mould preheated to 190°C and held in a press for curing. The material was held in the mould at 190°C for about 5 hours under a pressure of from 5 to 10 bar. After curing had been effected, the mould was allowed to cool to ambient temperature and the product aggregate was removed.

The density, hardness (Shore D), bending strength and modulus of elasticity of the aggregate were measured. In addition, to indicate the water absorption properties of the aggregate, samples of the aggregate were sawn into peices of size 120mm long with a section of 5mm square and immersed in water for 100 hours at ambient temperatures to allow the sample to absorb moisture and reach equilibrium. The quantity of water absorbed was recorded. The hardness (Shore D), bending strength and elasticity modulus of the aggregate after immersion was also recorded. The results are set out in Table 1 below.

Examples 2 to 4

The general procedure of Example 1 above was repeated using as starting materials sections of spruce and willow. In the treatment of willow, an additional dewatering stage was included, prior to introduction of the sections into the mould, in which the sections were dewatered by means of rollers and a press resulting in a material having a water content of 25%wt (75%wt dry wood).

The physical properties of the product aggregate were determined and are set out in Table 1 below.

The physical properties of untreated sections of eucalyptus, spruce and willow were determined under the same conditions as for the product aggregate, and are set out in Table 1 below, for comparision

purposes.

Table 1

| | Ex. 1 eucalyptus | Ex. 2 spruce | Ex. 3 willow | Ex. 4 willow | eucalyptus | untreated spruce | willow |
|---|---|---|---|---|---|---|---|
| before immersion in water | | | | | | | |
| density (kg/m³) | 900 | 600 | 500 | 1100 | 800 | 500 | 400 |
| hardness (Shore D) | 85 | 70 | 60 | 75 | 70 | 43 | 45 |
| bending strength (MPa) | 200 | 140 | 95 | 195 | 160 | 75 | 60 |
| modulus of elasticity (GPa) | 25 | 20 | 13 | 26 | 12 | 6 | 5 |
| water absorption (100 hrs, 20°C)(%wt) | 6 | 9 | 15 | 8 | 60 | 110 | 130 |
| after immersion in water | | | | | | | |
| hardness (Shore D) | 80 | 55 | 50 | 60 | 55 | 31 | 33 |
| bending strength (MPa) | 120 | 95 | 55 | 70 | 75 | 28 | 40 |
| modulus of elasticity (GPa) | 19 | 15 | 8 | 15 | 6 | 2 | 3 |

It can be seen from Table 1, that treatment of the eucalyptus, spruce and willow sections by the process of this invention yielded an aggregate having markedly superior mechanical properties both before and after complete immersion in water. In addition, the resistance of the aggregate to the absorption of water is significantly greater than that of the untreated wood.

Example 5

The general procedure of Example 1 was repeated. The product of the softening stage was allowed to cool to ambient temperature (20°C) and was rolled to form thin layers 0.5 to 2mm in thickness, thereby reducing the moisture content from 55%wt (45%wt dry wood) to 30%wt (70%wt dry wood). A powder of polymer/resin having particles of size 1 to 100 microns was applied to the layers using an electrostatic spraying device. The layers were stacked in the preheated mould and allowed to cure. After curing, the mould was allowed to cool to ambient temperature (20°C) and the aggregate was removed from the mould.

Example 6

The general procedure of Example 5 was repeated, with the exception that in place of the polymer/resin, styrene monomer was applied to the layers, together with a suitable polymerising catalyst. The conditions of the curing stage caused the styrene monomer to polymerise, yielding a homogeneous polystyrene-containing aggregate.

## Claims

1. A cellulosic fibrous aggregate formed from a cellulosic fibrous material by a process which comprises:
   a softening stage; and
   a curing stage, characterised in that the softening stage comprises exposing a section of cellulosic fibrous material to the action of a aqueous softening agent at a temperature m the range of from 150°C to 220°C at a pressure of at least the equilibrium vapour pressure the softening agent at the operating temperature, thereby at least partially disproportionating and hydrolysing the hemicellulose and lignin present in the cellulosic fibrous material;
   that the curing stage comprises drying the product of the softening stage at a temperature in the rage of from 100°C to 220°C to yield a cross-linked cellulosic matrix, and
   that the aggregate is made from sections of cellulosic fibrous material which are at least 20 cm in length ad have a cross-section of at least 5 mm.

2. An aggregate as claimed in claim 1, formed from a plurality of sections of cellulosic fibrous material.

3. An aggregate as claimed in claim 1 or 2, wherein the cellulosic fibrous material is light wood.

4. An aggregate as claimed in any of claims 1 to 3, further comprising one or more synthetic polymers or resins.

5. An aggregate as claimed in any preceding claim being a laminated aggregate comprising a plurality of layers of the cross-linked matrix bonded together by means of an adhesive compound.

6. An aggregate as claimed in claim 5, wherein the adhesive compound is a linear alternating copolymer of at least one olefinically unsaturated compound and carbon monoxide.

7. A process for the preparation of a cellulosic fibrous aggregate as claimed in claim 1, which process comprises
   a softening stage; and
   a curing stage, characterised in that the softening stage comprises exposing a section of cellulosic fibrous material to the action of an aqueous softening agent at a temperature in the range of from 150°C to 220°C at a pressure of at least the equilibrium pressure the softening agent at the operating temperature, thereby at least partially disproportionating and hydrolysing the hemicellulose and lignin present in the cellulosic fibrous material;
   that the curing stage comprises drying the product of the softening stage at a temperature in the range of from 100°C to 220°C to yield a cross-linked cellulosic matrix, and
   that the aggregate is made from sections of cellulosic fibrous material which are at least 20 cm in length and have a cross-section of at least 5 mm.

8. A process as claimed in claim 7, wherein the softening stage is effected at a temperature in the range of from about 180°C to 200°C.

9. A process as claimed in either of claims 7 or 8, wherein the softening stage is effected above the equilibrium vapour pressure of water at the operating temperature.

10. A process as claimed in any of claims 7 to 9, wherein the curing stage is effected at a temperature above 140°C.

11. A process as claimed in any of claims 7 to 10, further comprising a dewatering stage in between the softening stage and the curing stage.

12. A process as claimed in any of claims 7 to 11, wherein at least one of the stages of the process is effected under a substantially inert atmosphere.

13. A process as claimed in any of claims 7 to 12, comprising the additional stages of stacking the desired number of layers of cross-linked matrix having the required dimensions and shape and provided with a sufficient amount of adhesive, and placing the stacked sheets in a suitable press to provide bonding, thereby yielding a laminated aggregate as claimed in either of claims 4 or 5.

## Patentansprüche

1. Cellulosefaseraggregat, gebildet aus einem Cellulosefasermaterial durch ein Verfahren, das folgendes umfaßt:
   einen Erweichungsschritt; und
   einen Härtungsschritt, dadurch gekennzeichnet, daß man bei dem Erweichungsschritt ein wäßriges Erweichungsmittel bei einer Temperatur im Bereich von 150°C bis 220°C bei einem Druck von mindestens dem Gleichgewichtsdampfdruck des Erweichungsmittels bei der Arbeitstemperatur auf einen Abschnitt aus Cellulosefasermaterial einwirken läßt, wodurch die im Cellulosefasermaterial vorhandene Hemicellulose bzw. das im Cellulosefasermaterial vorhandene Lignin zumindest teilweise disproportioniert und hydrolysiert werden;
   daß man bei dem Härtungsschritt das Produkt des Erweichungsschrittes bei einer Temperatur im Bereich von 100°C bis 220°C trocknet, wodurch eine vernetzte Cellulosematrix erhalten wird, und
   daß das Aggregat aus Abschnitten eines Cellulosefasermaterials hergestellt wird, die zumindest 20 cm lang sind und über einen Querschnitt von mindestens 5 mm verfügen.

2. Aggregat nach Anspruch 1, gebildet aus mehreren Abschnitten eines Cellulosefasermaterials.

3. Aggregat nach Anspruch 1 oder 2, wobei es sich bei dem Cellulosefasermaterial um Leichtholz handelt.

4. Aggregat nach einem der Ansprüche 1 bis 3, das zusätzlich ein oder mehrere synthetische Polymerisate oder Harze enthält.

5. Aggregat nach einem der vorhergehenden Ansprüche, wobei es sich um ein Schichtaggregat mit mehreren Schichten der vernetzten Matrix handelt, die mittels einer Klebstoffverbindung miteinander verklebt sind.

6. Aggregat nach Anspruch 5, wobei es sich bei der Klebstoffverbindung um ein lineares alternierendes Copolymerisat aus mindestens einer olefinisch ungesättigten Verbindung und Kohlenmonoxyd handelt.

7. Verfahren zur Herstellung eines Cellulosefaseraggregats nach Anspruch 1, das folgendes umfaßt:
   einen Erweichungsschritt; und
   einen Härtungsschritt, dadurch gekennzeichnet, daß man bei dem Erweichungsschritt ein wäßriges Erweichungsmittel bei einer Temperatur im Bereich von 150°C bis 220°C bei einem Druck von mindestens dem Gleichgewichtsdampfdruck des Erweichungsmittels bei der Arbeitstemperatur auf einen Abschnitt aus Cellulosefasermaterial einwirken läßt, wodurch die im Cellulosefasermaterial vorhandene Hemicellulose bzw. das im Cellulosefasermaterial vorhandene Lignin zumindest teilweise disproportioniert und hydrolysiert werden;

daß man bei dem Härtungsschritt das Produkt des Erweichungsschrittes bei einer Temperatur im Bereich von 100°C bis 220°C trocknet, wodurch eine vernetzte Zellulosematrix erhalten wird, und

daß das Aggregat aus Abschnitten eines Zellulosefasermaterials hergestellt wird, die zumindest 20 cm lang sind und über einen Querschnitt von mindestens 5 mm verfügen.

8. Verfahren nach Anspruch 7, wobei der Erweichungsschritt bei einer Temperatur im Bereich von ungefähr 180°C bis 200°C durchgeführt wird.

9. Verfahren nach einem der Ansprüche 7 oder 8, wobei der Erweichungsschritt oberhalb des Gleichgewichtewasserdampfdrucks bei der Arbeitstemperatur durchgeführt wird.

10. Verfahren nach einem der Ansprüche 7 bis 9, wobei der Härtungsschritt bei einer Temperatur oberhalb von 140°C durchgeführt wird.

11. Verfahren nach einem der Ansprüche 7 bis 10, das zusätzlich zwischen dem Erweichungsschritt und dem Härtungsschritt einen Wasserentzugsschritt enthält.

12. Verfahren nach einem der Ansprüche 7 bis 11, wobei mindestens ein Verfahrensschritt unter einer im wesentlichen inerten Atmosphäre durchgeführt wird.

13. Verfahren nach einem der Ansprüche 7 bis 12 mit den zusätzlichen Schritten, in denen die gewünschte Anzahl Schichten aus vernetzter Matrix mit den erforderlichen Dimensionen und der erforderlichen Form und versehen mit einer genügend großen Menge an Klebstoff gestapelt werden und die gestapelten Platten zwecks Verklebung in eine geeignete Presse eingebracht werden, wodurch man ein Schichtaggregat nach einem der Ansprüche 4 oder 5 erhält.

## Revendications

1. Un agrégat fibreux cellulosique réalisé à partir d'un matériau fibreux cellulosique par un procédé qui comporte:

une étape d'amollissement; et

une étape de durcissement, caractérisé en ce que l'étape d'amollissement consiste à exposer une section d'un matériau fibreux cellulosique à l'action d'un agent d'adoucissement aqueux à une température dans la gamme de 150°C à 220°C sous une pression égale au moins à la tension de vapeur à l'équilibre de l'agent d'amollissement à la température de traitement, de façon à dismuter et à hydrolyser, au moins partiellement, l'hémicellulose et la lignine présentes dans le matériau fibreux cellulosique;

que l'étape de durcissement consiste à sécher le produit obtenu au stade d'amollissement à une température dans la gamme de 100°C à 220°C afin d'obtenir une matrice cellulosique réticulée, et

que l'agrégat est réalisé à partir de sections d'un matériau fibreux cellulosique, qui présente au moins 20 cm de longueur et ont une coupe transversale d'au moins 5 mm.

2. Un agrégat tel que revendiqué dans la revendication 1, formé à partir d'une pluralité de sections de matériau fibreux cellulosique.

3. Un agrégat tel que revendiqué dans la revendication 1 ou 2, dans lequel le matériau fibreux cellulosique est du bois léger.

4. Un agrégat tel que revendiqué dans l'une quelconque des revendications 1 à 3, comportant en outre un ou plus d'un polymère synthétique ou d'une résine synthétique.

5. Un agrégat tel que revendiqué dans l'une quelconque des revendications précédentes, qui est un agrégat stratifié comportant une pluralité de couches d'une matrice réticulée, liées ensemble au moyen d'un composé adhésif.

6. Un agrégat tel que revendiqué dans la revendication 5, dans lequel le composé adhésif est un copolymère alterné linéaire constitué d'au moins un composé à insaturation éthylénique et de monoxyde de carbone.

**7.** Un procédé pour la préparation d'un agrégat fibreux cellulosique tel que revendiqué dans la revendication 1, ce procédé comportant :

une étape d'amollissement; et

une étape de durcissement, caractérisé en ce que l'étape d'amollissement consiste à exposer une section d'un matériau fibreux cellulosique à l'action d'un agent d'adoucissement aqueux à une température dans la gamme de 150°C à 220°C sous une pression égale au moins à la tension de vapeur à l'équilibre de l'agent d'amollissement à la température de traitement, de façon à dismuter et à hydrolyser, au moins partiellement, l'hémicellulose et la lignine présentes dans le matériau fibreux cellulosique;

que l'étape de durcissement consiste à sécher le produit obtenu au stade d'amollissement à une température dans la gamme de 100°C à 220°C afin d'obtenir une matrice cellulosique réticulée, et

que l'agrégat est réalisé à partir de sections d'un matériau fibreux cellulosique, qui présentent au moins 20 cm de longueur et ont une coupe transversale d'au moins 5 mm.

**8.** Un procédé selon la revendication 7, dans lequel l'étape d'amollissement est réalisée à une température dans la gamme d'environ 180°C à 200°C.

**9.** Un procédé tel que revendiqué dans l'une quelconque des revendications 7 ou 8, dans lequel l'étape d'amollissement est réalisée au-dessus de la tension de vapeur à l'équilibre de l'eau à la température de traitement.

**10.** Un procédé tel que revendiqué dans l'une quelconque des revendications 7 à 9, dans lequel l'étape de durcissement est réalisée à une température supérieure à 140°C.

**11.** Un procédé tel que revendiqué dans l'une quelconque des revendications 7 à 10, comportant en outre une étape de déshydratation entre l'étape d'amollissement et l'étape de durcissement.

**12.** Un procédé tel que revendiqué dans l'une quelconque des revendications 7 à 11, dans lequel au moins une des étapes du procédé est réalisée sous une atmosphère pratiquement inerte.

**13.** Un procédé tel que revendiqué dans l'une quelconque des revendications 7 à 12, comportant les étapes supplémentaires d'empiler le nombre souhaité de couches de matrice réticulée présentant les dimensions et la forme exigées et pourvues d'une quantité suffisante d'adhésif et de disposer les feuilles empilées dans une presse appropriée afin de réaliser la liaison, en obtenant ainsi un agrégat stratifié tel que revendiqué dans l'une quelconque des revendications 4 ou 5.